# FASCICULE DE BREVET EUROPEEN

(11) **EP 3 579 037 B1**
(45) Date de publication et mention de la délivrance du brevet: **06.07.2022**
(21) Numéro de dépôt: 19177340.7
(22) Date de dépôt: 29.05.2019
(51) Int. Cl.: G02B 6/44

(54) **DISPOSITIF DE MODULES PIVOTANTS DE TÉLÉCOMMUNICATION OPTIQUE EN MATIÈRE PLASTIQUE**
VORRICHTUNG MIT SCHWENKBAREN MODULEN FÜR OPTISCHE TELEKOMMUNIKATION AUS KUNSTSTOFF
DEVICE FOR OPTICAL TELECOMMUNICATION PIVOTING MODULES MADE FROM PLASTIC MATERIAL

(30) Priorité: 07.06.2018 FR 1854947
(43) Date de publication de la demande: 11.12.2019
(73) Titulaire: Nexans, 92400 Courbevoie (FR)
(72) Inventeur: DEVAUX, Julien, 08160 Chalandry-Elaire (FR); DIDIER, Loïc, 78330 Fontenay-le-Fleury (FR); LIMA, Cyril, 08200 Sedan (FR); THORN, Nicolas, 08090 This (FR)
(74) Mandataire: Ipsilon

(56) Documents cités:
- WO-A2-2016/042018
- US-A- 5 100 221
- US-A1- 2009 148 117
- US-A1- 2012 152 463
- US-B1- 6 535 682

## Description

L'invention concerne un dispositif de modules pivotants de télécommunication optique en matière plastique.

Un tel dispositif connu en matière plastique est décrit dans le document de brevet WO 2014/147059. Il comporte un châssis de montage destiné à recevoir un module de télécommunication optique, comportant pour chaque module une pièce de support comportant un pivot cylindrique. La pièce de support est latérale et le module comporte une cavité de pivotement latérale apte à être clipsée sur le pivot cylindrique. Le module comporte un canal de guidage des fibres optiques à proximité de cette cavité de pivotement.

En amont de ce canal de guidage, à l'interface de la pièce de support et du module pivotant, ce dispositif ne comporte pas d'éléments de guidage des fibres optiques et il peut en résulter des dommages de celles-ci compte-tenu des mouvements de fibres optiques induits par le mouvement de rotation du module par rapport à la pièce de support fixe.

Le document de brevet WO 2016/042018 porte sur un assemblage de modules de télécommunication. Le document de brevet US 2009/148117 porte sur un dispositif et une méthode de couplage de guide d'onde optique.

L'invention résout le problème susmentionné en proposant un dispositif de modules pivotants de télécommunication optique en matière plastique de fabrication standardisé, de montage aisé et assurant une protection des fibres optiques.

Pour ce faire, l'invention propose un dispositif de modules pivotants de télécommunication optique conforme à la revendication 1.

De préférence, ledit second agencement de pivotement est apte à être clipsé sur ledit premier agencement de pivotement.

De préférence, ledit module comporte un canal de guidage latéral des fibres optiques en aval de ladite partie de guidage.

Selon un premier mode de réalisation préféré, ladite partie de guidage est une paroi courbe concave disposée en amont de l'axe de pivotement du module sur la trajectoire des fibres optiques.

Il est ainsi réalisé une pré-courbure des fibres optiques par appui de ces dernières sur cette paroi courbe concave, autour de l'axe de pivotement et en amont du canal de guidage des fibres optiques. Ceci empêche que les fibres soient poussées vers des zones pouvant les mettre en contrainte et/ou les endommager.

Les mouvements de fibres optiques induits par le mouvement de pivotement de la partie pivotante du module par rapport à la pièce de support fixe sont ainsi canalisés grâce à une zone judicieusement localisée dans la zone proche du pivot dans la partie pivotante du module.

Avantageusement, ladite paroi courbe est une paroi partielle cylindrique d'axe parallèle à de l'axe de pivotement du module.

Selon un second mode de réalisation préféré, ladite partie de guidage est constituée d'un canal de guidage équipé de languettes de retenue de préférence moulé dans ladite pièce de support.

Il est ainsi obtenu une transition sécurisée à l'interface de la pièce de support et du module pivotant.

De préférence, ledit canal de guidage équipé de languettes de retenue assure une trajectoire des fibres tangentiellement à l'axe dudit ou desdits pivots.

Les mouvements de fibres sont alors très réduits et quasi nuls car les fibres sont soumises à un effort de torsion plutôt qu'à un effort de traction.

De préférence, ladite pièce de support comporte un agencement d'enroulement des fibres optiques en amont dudit canal de guidage de préférence moulé dans ladite pièce support.

Avantageusement, ladite pièce de support est fixée par clipsage, sur un profilé perforé d'orifices régulièrement répartis verticalement.

Le montage est grandement facilité par cet agencement de clipsage.

Plus précisément, ladite pièce de support peut avantageusement comporter au moins deux ouvertures de même distance que deux dits orifices dudit profilé et disposées en vis-à-vis de ces orifices, qu'une douille est clipsée dans chacune de ces ouvertures et en ce qu'un pion de blocage est clipsé dans chaque douille introduite dans chaque orifice et ouverture.

Ledit module comporte deux ensembles d'au moins une cavité de pivotement latéraux symétriques par rapport à un plan transversal central du module et aptes à être clipsés l'un sur le ou les pivot(s) d'une pièce de support montée à gauche dudit plan ou l'autre sur le ou les pivot(s) d'une pièce de support montée à droite dudit plan.

Le même module peut ainsi être monté avec un axe de pivotement à droite ou à gauche en vue de face, ou autrement dit avec une rotation horaire ou antihoraire.

Il est ainsi obtenu une standardisation et une réduction du nombre d'ordres de fabrication. Le stockage est grandement facilité.

Par ailleurs, le montage est facilité sur le terrain puisque le montage du module sur la pièce de support peut s'effectuer sur le terrain. Ainsi, le produit installé peut ne devenir avec un axe de pivotement à gauche ou avec un axe de pivotement à droite qu'au moment de la phase d'installation. Le découplage de cette pièce de support et du module facilite la mise en place.

Lorsque la hauteur du module est réduite et égale à une unité standardisée, l'intérieur dudit module présente un fond apte à recevoir un ensemble de pièces permettant le guidage et/ou l'épissurage et/ou l'accueil de systèmes de couplage et/ou le stockage de fibres optiques, agencées de façon à permettre un montage réversible à gauche ou à droite dudit plan.

Lorsque la hauteur du module est plus importante et égale à plusieurs unités standardisées, l'intérieur dudit module comporte une platine pivotante et apte à recevoir un ensemble de pièces permettant le guidage et/ou l'épissurage et/ou l'accueil de systèmes de couplage et/ou le stockage de fibres optiques, agencées de façon à permettre un montage réversible à gauche ou à droite dudit plan.

De préférence, ladite pièce de support latérale comporte une première et une deuxième parties planes s'étendant dans un plan perpendiculaire à un axe de pivotement du module par rapport à la pièce de support, le pivot cylindrique s'étendant entre la première et la deuxième parties planes, la cavité de pivotement étant configurée pour s'insérer entre la première et la deuxième parties planes.

L'invention est décrite ci-après plus en détail à l'aide de figures ne représentant qu'un mode de réalisation préféré de l'invention.
Les figures 1 et 2 sont des vues en perspective d'un dispositif de modules pivotants de télécommunication optique conforme à l'invention avec un module pivotant à gauche, en position ouverte et en position fermée.
Les figures 3 et 4 sont des vues en perspective d'un dispositif de modules pivotants de télécommunication optique conforme à l'invention avec un module pivotant à droite, en position ouverte et en position fermée.
La figure 5 est une vue en perspective d'un module conforme à l'invention, d'une hauteur d'une unité standardisée.
Les figures 6A à 6G sont des vues en perspective de détail d'un dispositif de modules pivotants de télécommunication optique conforme à l'invention.
La figure 7 est une vue en perspective de détail du dispositif illustré sur la figure 2, destiné à être équipé d'un module d'une hauteur d'une unité standardisée.
Les figures 8A et 8B sont des vues en perspective d'un module d'une épaisseur de quatre unités standardisées et d'une platine équipée d'un système d'organiseur de fibres optiques, destiné à un tel module, conformément à l'invention.
La figure 8C est une vue en perspective de ce module en position pivotée.
Les figures 9A et 9B sont des vues frontales et en perspective de détail, d'un dispositif de support destiné à être équipé d'un module d'une hauteur de plusieurs unités standardisées.
La figure 10 est une vue perspective de détail d'un module d'une hauteur de plusieurs unités standardisées.

Bien que sur les figures ne soit représenté qu'un seul module, un dispositif de modules pivotants de télécommunication optique comporte en général une pluralité de modules pivotants superposés.

Selon les configurations, ces modules peuvent être plus ou moins haut et contenir un certain nombre de connexions, de cassettes, d'agencements d'épissurage, etc...

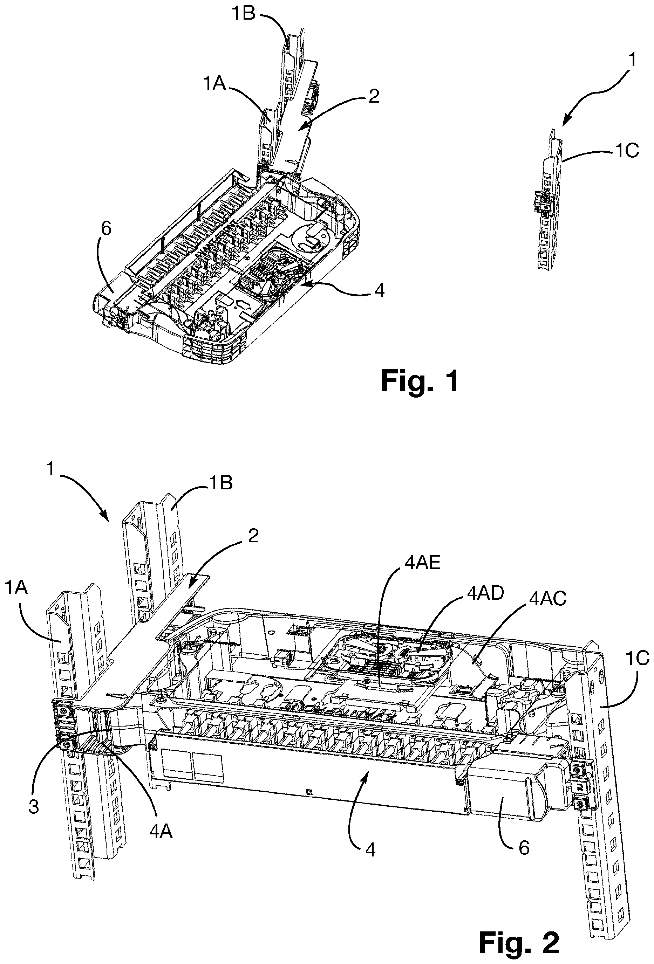

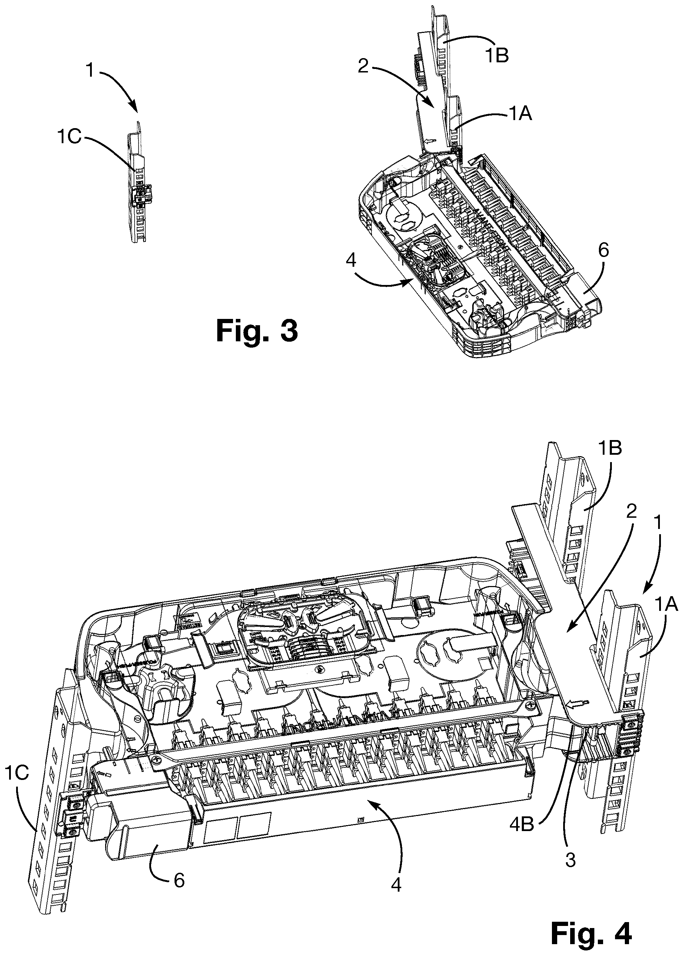

Comme illustré sur les figures 1 à 4, un dispositif de modules pivotants de télécommunication optique en matière plastique, par exemple en polycarbonate renforcé de fibres de verre, conforme à l'invention, comporte un châssis de montage 1 supportant pour chaque module une pièce de support 2 comportant un pivot cylindrique 3.

Le module est représenté pourvu d'un capot transparent.

La pièce de support 2 est ici fixée latéralement sur deux profilés 1A, 1B du châssis de montage. Un troisième profilé 1C actif est situé de l'autre côté du module 4.

Chaque module 4 comporte deux cavités de pivotement latérales 4A, 4B, dont l'une est clipsée sur le pivot cylindrique 3 de la pièce de support 2.

Un loquet 6 est solidarisé au module 4 du côté de sa face frontale opposé au pivot 3.

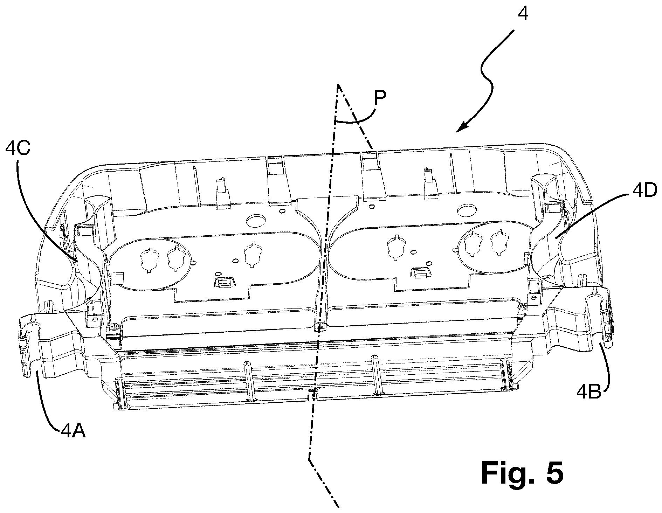

Comme mieux visible sur la figure 5, chaque module 4 est conformé de façon quasi symétrique par rapport à un plan transversal central P du module. Plus précisément, les deux cavités de pivotement 4A, 4B sont symétriques par rapport au plan transversal central P du module et aptes à être clipsées l'une sur le pivot d'une pièce de support 2 montée à gauche du plan P ou l'autre sur le pivot d'une pièce de support 2 montée à droite du plan P.

Comme décrit et illustré précédemment, le même module peut ainsi être monté avec un axe de pivotement à droite ou à gauche en vue de face, ou autrement dit avec une rotation horaire ou antihoraire

Il comporte deux canaux de guidage symétriques 4C, 4D latéraux des fibres optiques en aval de la partie de guidage de la pièce de support 2. Ces canaux possèdent une zone plus large située dans la partie pivotante du module 4 au plus proche du pivot de la pièce de support 2.

Selon les figures 1 à 5, la hauteur du module est réduite et égale à une unité standardisée et l'intérieur du module 4 présente un fond apte à recevoir un ensemble de pièces permettant le guidage 4AC et/ou l'épissurage 4AD et/ou l'accueil de systèmes de couplage 4AE et/ou le stockage de fibres optiques, agencées de façon à permettre un montage réversible à gauche ou à droite dudit plan.

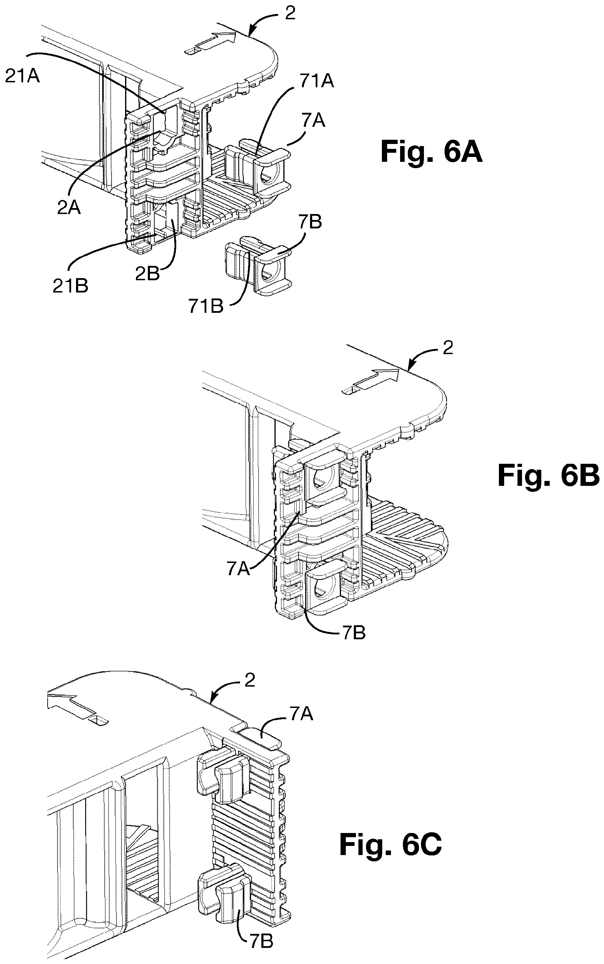

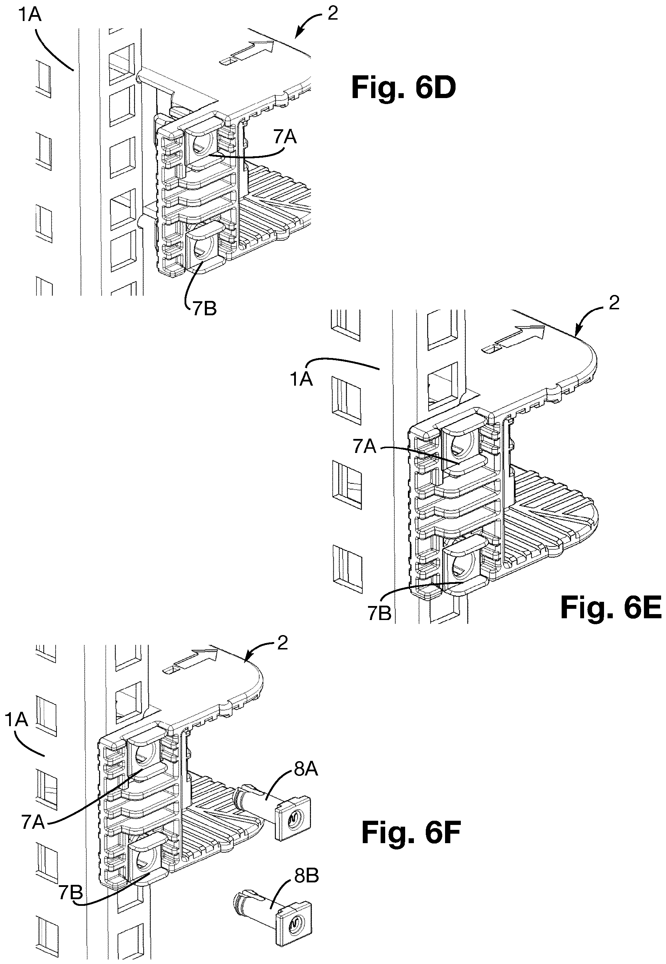

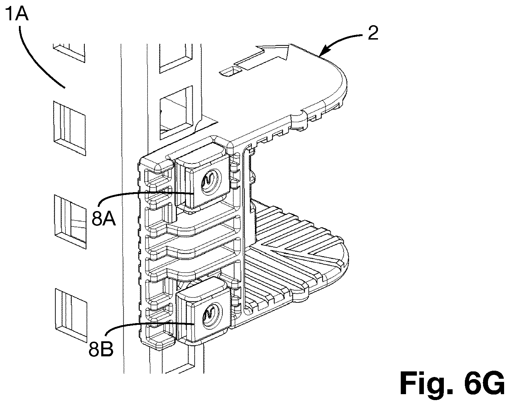

Les figures 6A à 6G illustrent la fixation par clipsage de la pièce de support 2 sur un profilé 1A standardisé perforé d'orifices régulièrement répartis verticalement du châssis de montage 1.

La pièce de support 2 comporte ici deux ouvertures 2A, 2B de même distance que deux orifices du profilé 1A ; une douille 7A, 7B est clipsée dans chacune de ces ouvertures 2A, 2B ; ces douilles 7A, 7B sont disposées en vis-à-vis des orifices du profilé 1A et clipsées dans ceux-ci et un pion de blocage 8A, 8B est clipsé dans chaque douille 7A, 7B introduite dans chaque orifice et ouverture.

Les ouvertures 2A, 2B comportent chacune au moins un rail 21A, 21B de détrompage coopérant avec une fente centrale 71A, 71B de chacune des douilles 7A, 7B.

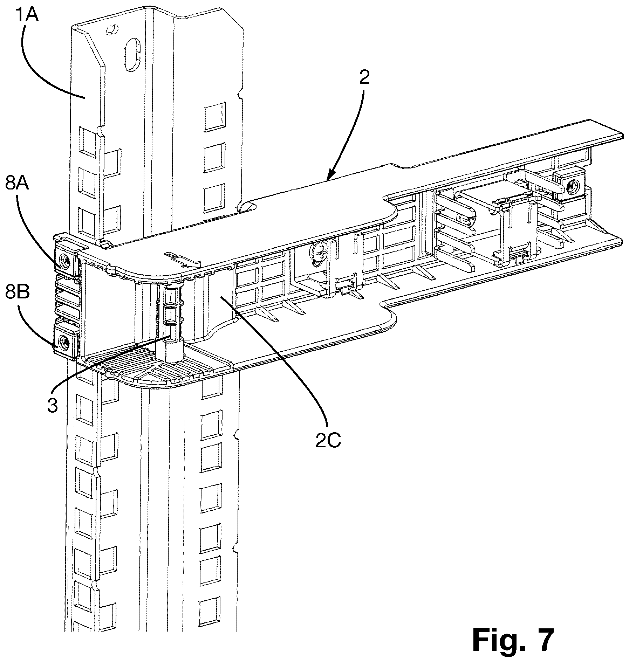

La figure 7 est une vue en perspective d'une pièce de support 2 montée à gauche comme illustré sur la figure 2 et destinée à un module d'une hauteur d'une unité standardisée.

Le dispositif de modules pivotants de télécommunication optique en matière plastique comporte donc un châssis de montage destiné à recevoir un module de télécommunication optique, comportant pour chaque module une pièce de support latérale 2 comportant un pivot cylindrique 3, le module 4 comportant une cavité de pivotement latérale 4A apte à être clipsée sur le pivot cylindrique 3 et un canal de guidage 4C des fibres optiques à proximité de cette cavité de pivotement, comme illustré sur la figure 5.

Cette pièce de support 2 est clipsée sur un profilé 1A comme précédemment décrit.

La pièce de support 2 comporte au moins une partie de guidage des fibres optiques en amont du canal de guidage 4C sur la trajectoire des fibres optiques.

Plus précisément, cette partie de guidage est une paroi courbe concave 2C disposée en amont du pivot 3 et à proximité de celui-ci sur la trajectoire des fibres optiques. Cette paroi courbe concave 2C est une paroi partielle cylindrique d'axe parallèle à l'axe du pivot 3. La paroi concave permet de guider les torons de fibres optiques vers la zone plus large dudit canal de guidage destinée à les recevoir.

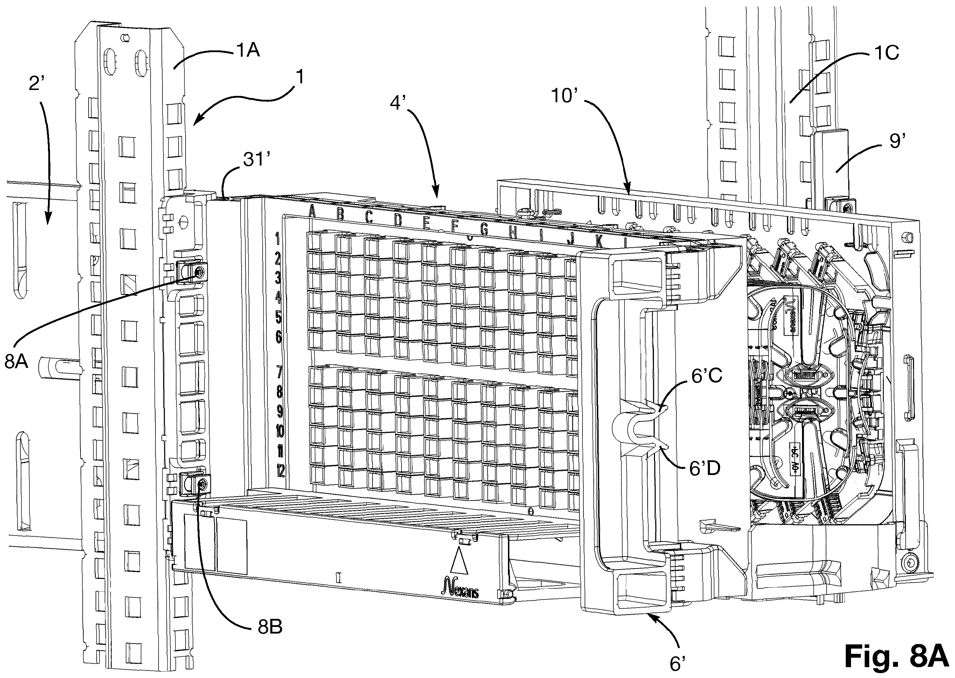

Le module conforme à l'invention précédemment décrit est d'une hauteur réduite d'une unité, mais l'invention s'applique également à un module d'une hauteur supérieure de plusieurs unités, par exemple de quatre unités comme illustré sur la figure 8A.

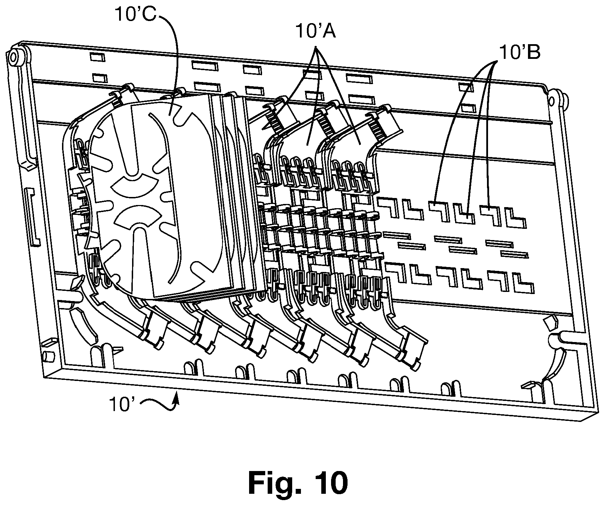

Le module 4', ici représenté sans capot et monté à gauche, comporte alors une base sur laquelle est montée une platine pivotante 10' représentée seule sur la figure 10 et apte à recevoir un ensemble de pièces permettant le guidage 10'A et/ou l'épissurage 10'C et/ou l'accueil de systèmes de couplage et/ou le stockage de fibres optiques, agencées de façon à permettre un montage réversible à gauche ou à droite dudit plan, grâce à des orifices de clipsage adéquats 6B.

Comme précédemment, le dispositif de modules pivotants de télécommunication optique en matière plastique comporte un châssis de montage 1 supportant pour chaque module 4' une pièce de support 2' comportant deux pivots cylindriques de même axe dont un seul 31' est visible sur la figure.

La pièce de support 2' est ici fixée latéralement à gauche, sur deux profilés dont un seul 1A est ici visible, du châssis de montage. Un troisième profilé 1C actif est situé de l'autre côté du module.

Chaque module 4' comporte deux ensembles de deux cavités de pivotement latérales alignées, dont deux cavités sont clipsées sur les pivots cylindriques de la pièce de support 2'.

Un loquet 6' est solidarisé au module 4' du côté de sa face frontale opposé au pivot 3'. Le loquet 6' comporte deux éléments de verrouillage 6'C, 6'D coopérant par glissement avec les pans incliné du système de fixation et de rattrapage de jeu 9' et coopérant par verrouillage avec deux pattes du système de fixation et de rattrapage de jeu 9'.

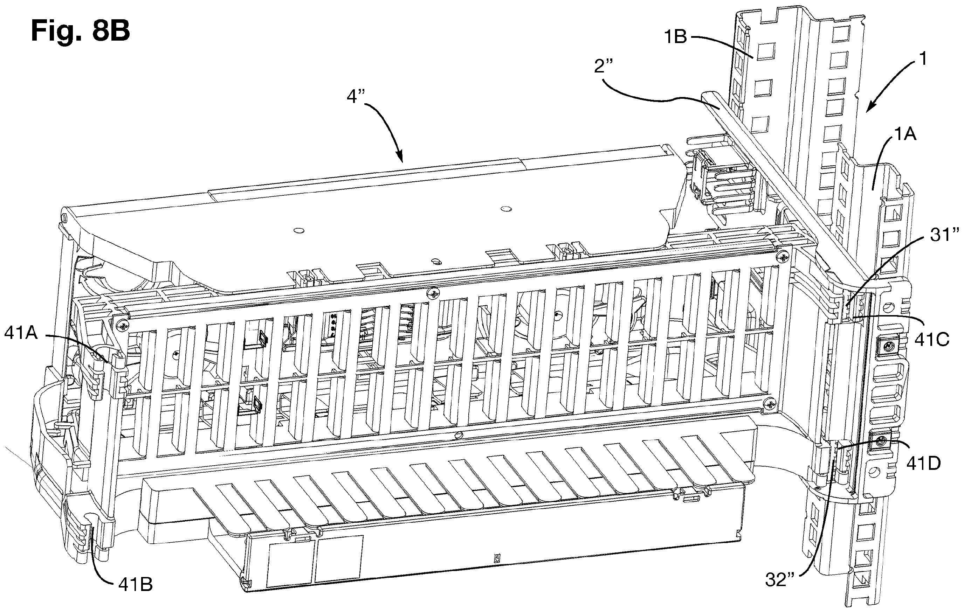

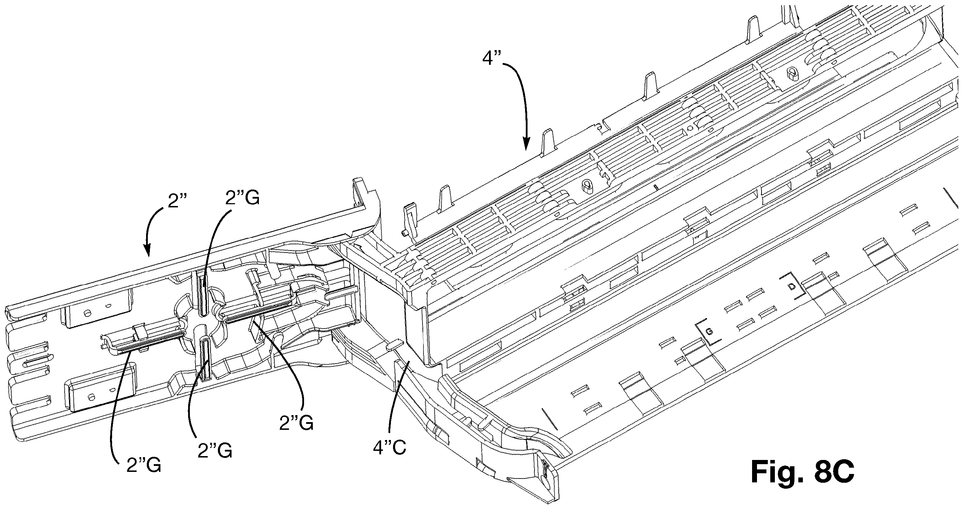

Un autre module 4" est représenté sur la figure 8B et 8C équipé ou non de son capot et monté à droite. Comme précédemment il comporte une base sur laquelle est montée une platine pivotante du type de la platine 10' telle que représentée seule sur la figure 10.

Comme précédemment, le dispositif de modules pivotants de télécommunication optique en matière plastique comporte un châssis de montage 1 supportant pour chaque module 4" une pièce de support 2" comportant deux pivots cylindriques de même axe 31" et 32".

La pièce de support 2" est fixée latéralement à droite, sur deux profilés 1A et 1B, du châssis de montage. Les profilés du côté gauche ne sont pas visibles.

Chaque module 4" comporte deux ensembles de deux cavités de pivotement latéraux de même axe 41A à 41D, dont deux cavités 41C, 41D sont clipsées sur les pivots cylindriques 31" et 32" de la pièce de support 2".

Comme particulièrement visible sur la figure 8C, Le module 4" comporte également deux canaux de guidage symétriques 4"C latéraux des fibres optiques en aval de la partie de guidage de la pièce de support 2".

Le loquet et le système de fixation et de rattrapage de jeu ne sont pas ici montés.

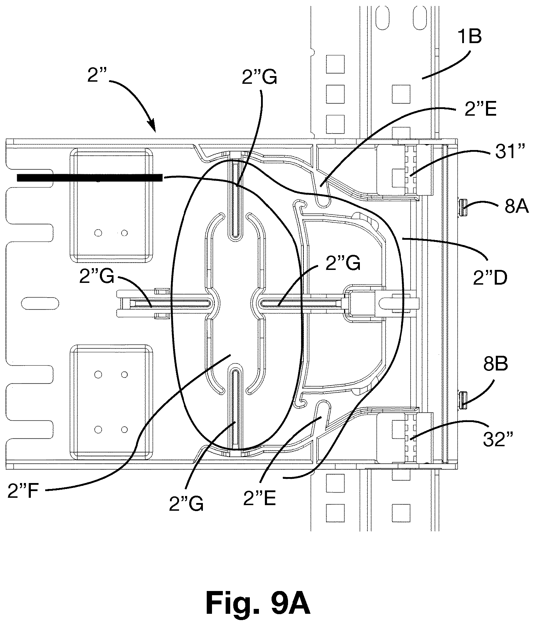

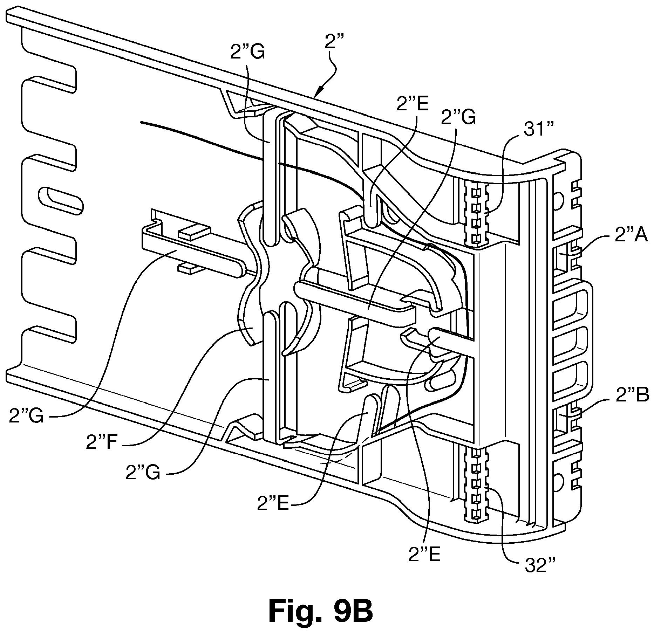

Les figures 9A et 9B sont des vues d'une pièce de support 2" montée à droite comme illustré sur la figure 8B et destinée à équiper un module d'une hauteur de plusieurs unités standardisées.

Cette pièce de support 2" est clipsée sur un profilé 1B comme précédemment décrit.

La pièce de support 2" comporte au moins une partie de guidage des fibres optiques en amont des pivots 31", 32" dans le module sur la trajectoire des fibres optiques.

Plus précisément, cette partie de guidage est constituée d'un canal de guidage 2"D équipé de languettes de retenue 2"E et moulé dans la pièce de support 2".

Le canal de guidage 2"D assure une trajectoire des fibres tangentiellement à l'axe des pivots 31", 32".

La pièce de support 2" comporte également un agencement d'enroulement 2"F des fibres optiques en amont du canal de guidage 2"D. Cet agencement d'enroulement 2"F est également moulé dans la pièce de support 2" et comporte quatre languettes de retenue 2"G en croix autour d'un tronçon de bobine central.

## Revendications

1. Dispositif de modules pivotants de télécommunication optique en matière plastique comprenant un châssis de montage (1A, 1B, 1C), au moins un module pivotant de télécommunication optique (4), et une pièce de support latérale (2, 2', 2") pour chaque module, ledit module étant destiné à être supporté par le châssis de montage (1A, 1B, 1C) par l'intermédiaire de ladite pièce de support latérale, la pièce de support latérale (2, 2', 2") comportant au moins un premier agencement de pivotement (3, 31', 31", 32"), le module comportant au moins un second agencement de pivotement (4A, 4B), ledit second agencement de pivotement étant configuré pour être lié sur ledit premier agencement de pivotement (3, 31', 31", 32"), ladite pièce de support (2) comportant au moins une partie de guidage destinée à recevoir des fibres optiques en amont dudit ou desdits premier(s) agencement(s) de pivotement (3, 31', 31", 32"), ladite partie de guidage étant configurée pour être placée sur la trajectoire des fibres optiques, le dispositif étant **caractérisé en ce que** ledit au moins un premier agencement de pivotement (3, 31', 31", 32") est un pivot cylindrique et ledit au moins un second agencement de pivotement (4A, 4B) est une cavité de pivotement et **en ce que** ledit module (4, 4', 4") comporte deux ensembles d'au moins une cavité de pivotement latéraux symétriques par rapport à un plan transversal central (P) du module et étant configurés pour être clipsés l'un sur le ou les pivot(s) d'une pièce de support (2, 2', 2") montée à gauche dudit plan (P) ou l'autre sur le ou les pivot(s) d'une pièce de support (2, 2', 2") montée à droite dudit plan (P).

2. Dispositif selon la revendication 1, **caractérisé en ce que** ledit au moins un second agencement de pivotement (4A, 4B) est configuré pour être clipsé sur ledit au moins un premier agencement de pivotement (3, 31', 31", 32").

3. Dispositif selon la revendication 1 ou 2, **caractérisé en ce que** ledit module comporte un canal de guidage (4C, 4D, 4"C) latéral des fibres optiques en aval de ladite partie de guidage.

4. Dispositif selon l'une des revendications précédentes, **caractérisé en ce que** ladite partie de guidage est une paroi courbe concave (2C) disposée en amont de l'axe de pivotement du module sur la trajectoire des fibres optiques.

5. Dispositif selon la revendication précédente, **caractérisé en ce que** ladite paroi courbe (2C) est une paroi partielle cylindrique d'axe parallèle à de l'axe de pivotement du module.

6. Dispositif selon l'une des revendications précédentes, **caractérisé en ce que** ladite partie de guidage est constituée d'un canal de guidage (2"D) équipé de languettes de retenue (2"E).

7. Dispositif selon la revendication précédente, **caractérisé en ce que** ledit canal de guidage (2"D) équipé de languettes de retenue assure une trajectoire des fibres tangentiellement à l'axe dudit ou desdits pivot(s).

8. Dispositif selon la revendication 6 ou 7, **caractérisé en ce que** ladite pièce de support (2") comporte un agencement d'enroulement (2"F) des fibres optiques en amont dudit canal de guidage (2"D).

9. Dispositif selon l'une des revendications précédentes, **caractérisé en ce que** ladite pièce de support (2, 2', 2") est fixée par clipsage, sur un profilé (1A) perforé d'orifices régulièrement répartis verticalement.

10. Dispositif selon la revendication précédente, **caractérisé en ce que** ladite pièce de support (2) comporte au moins deux ouvertures (2A, 2B) de même distance que deux dits orifices dudit profilé (1A) et disposées en vis-à-vis de ces orifices, qu'une douille (7A, 7B) est clipsée dans chacune de ces ouvertures (2A, 2B) et **en ce qu'**un pion de blocage (8A, 8B) est clipsé dans chaque douille (7A, 7B) introduite dans chaque orifice et ouverture.

11. Dispositif selon l'une des revendications précédentes, **caractérisé en ce que** l'intérieur dudit module (4) présente un fond configuré pour recevoir un ensemble de pièces permettant le guidage (4C) et/ou l'épissurage (4D) et/ou l'accueil de systèmes de couplage et/ou le stockage de fibres optiques, agencées de façon à permettre un montage réversible à gauche ou à droite dudit plan.

12. Dispositif selon l'une des revendications 1 à 10, **caractérisé en ce que** l'intérieur dudit module (4', 4") comporte une platine pivotante (10') configuré pour recevoir un ensemble de pièces permettant le guidage (10'A) et/ou l'épissurage (10'C) et/ou l'accueil de systèmes de couplage et/ou le stockage de fibres optiques, agencées de façon à permettre un montage réversible à gauche ou à droite dudit plan.

13. Dispositif selon l'une quelconque des revendications précédentes, **caractérisé en ce que** la pièce de support latérale comporte une première et une deuxième parties planes s'étendant dans un plan perpendiculaire à un axe de pivotement du module par rapport à la pièce de support, le pivot cylindrique s'étendant entre la première et la deuxième parties planes, la cavité de pivotement étant configurée pour s'insérer entre la première et la deuxième parties planes.

## Patentansprüche

1. Vorrichtung mit schwenkbaren Modulen für optische Telekommunikation aus Kunststoff, umfassend ein Montagegestell (1A, 1B, 1C), mindestens ein schwenkbares Modul für optische Telekommunikation (4) und ein seitliches Halteteil (2, 2', 2") für jedes Modul, wobei das Modul bestimmt ist, von dem Montagegestell (1A, 1B, 1C) anhand des seitlichen Halteteils gehalten zu werden, wobei das seitliche Halteteil (2, 2', 2") mindestens eine erste Schwenkeinrichtung (3, 31', 31", 32") aufweist, wobei das Modul mindestens eine zweite Schwenkeinrichtung (4A, 4B) aufweist, wobei die zweite Schwenkeinrichtung ausgelegt ist, um auf der ersten Schwenkeinrichtung (3, 31', 31", 32") verbunden zu sein, wobei das Halteteil (2) mindestens einen Führungsteil aufweist, der bestimmt ist, optische Fasern aufzunehmen, der/den ersten Schwenkeinrichtung/en (3, 31', 31", 32") vorgelagert ist, wobei der Führungsteil ausgelegt ist, um auf der Bahn der optischen Fasern platziert zu sein, wobei die Vorrichtung **dadurch gekennzeichnet ist, dass** die mindestens eine erste Schwenkeinrichtung (3, 31', 31", 32") ein zylindrischer Drehzapfen ist und die mindestens eine zweite Schwenkeinrichtung (4A, 4B) ein Schwenkhohlraum ist und dass das Modul (4, 4', 4") zwei seitliche Einheiten aus mindestens einem Schwenkhohlraum aufweist, die im Verhältnis zu einer zentralen transversalen Ebene (P) des Moduls symmetrisch sind und ausgelegt, um, die eine, auf dem oder den Drehzapfen eines Halteteils (2, 2', 2"), das links von der Ebene (P) angebracht ist, oder, die andere, auf dem oder den Drehzapfen eines Halteteils (2, 2', 2"), das rechts von der Ebene (P) angebracht ist, arretiert zu sein.

2. Vorrichtung nach Anspruch 1, **dadurch gekennzeichnet, dass** die mindestens eine zweite Schwenkeinrichtung (4A, 4B) ausgelegt ist, um auf der mindestens einen ersten Schwenkeinrichtung (3, 31', 31", 32") arretiert zu sein.

3. Vorrichtung nach Anspruch 1 oder 2, **dadurch gekennzeichnet, dass** das Modul einen seitlichen Führungskanal (4C, 4D, 4"C) der optischen Fasern nachgelagert zum Führungsteil aufweist.

4. Vorrichtung nach einem der vorangehenden Ansprüche, **dadurch gekennzeichnet, dass** der Führungsteil eine konkav gekrümmte Wand (2C) ist, die der Schwenkachse des Moduls vorgelagert auf der Bahn der optischen Fasern angeordnet ist.

5. Vorrichtung nach vorangehendem Anspruch, **dadurch gekennzeichnet, dass** die gekrümmte Wand (2C) eine zylindrische Teilwand mit einer Achse parallel zur Schwenkachse des Moduls ist.

6. Vorrichtung nach einem der vorangehenden Ansprüche, **dadurch gekennzeichnet, dass** der Führungsteil aus einem Führungskanal (2"D) besteht, der mit Haltezungen (2"E) ausgestattet ist.

7. Vorrichtung nach vorangehendem Anspruch, **dadurch gekennzeichnet, dass** der mit Haltezungen ausgestattete Führungskanal (2"D) eine Bahn der Fasern tangential zur Achse des oder der Drehzapfen/s sichert.

8. Vorrichtung nach Anspruch 6 oder 7, **dadurch gekennzeichnet, dass** das Halteteil (2") eine dem Führungskanal (2"D) vorgelagerte Wickeleinrichtung (2"F) der optischen Fasern aufweist.

9. Vorrichtung nach einem der vorangehenden Ansprüche, **dadurch gekennzeichnet, dass** das Halteteil (2, 2', 2") durch Arretieren auf einem von vertikal regelmäßig verteilten Löchern perforierten Profil (1A) befestigt ist.

10. Vorrichtung nach vorangehendem Anspruch, **dadurch gekennzeichnet, dass** das Halteteil (2) mindestens zwei Öffnungen (2A, 2B) gleichen Abstands wie zwei Löcher des Profils (1A) aufweist und die gegenüber diesen Löchern angeordnet sind, dass eine Hülse (7A, 7B) in jeder dieser Öffnungen (2A, 2B) arretiert ist und dass ein Blockierstift (8A, 8B) in jeder Hülse (7A, 7B) arretiert ist, die in jedes Loch und jede Öffnung eingeführt ist.

11. Vorrichtung nach einem der vorangehenden Ansprüche, **dadurch gekennzeichnet, dass** das Innere des Moduls (4) einen Boden aufweist, der ausgelegt ist, um eine Einheit von Teilen aufzunehmen, die die Führung (4C) und/oder das Spleißen (4D) und/oder die Aufnahme von Kopplungs- und/oder Lagersystemen optischer Fasern erlauben, die derart eingerichtet sind, dass eine reversible Montage links oder recht von der Ebene erlaubt ist.

12. Vorrichtung nach einem der Ansprüche 1 bis 10, **dadurch gekennzeichnet, dass** das Innere des Moduls (4', 4") eine Schwenkplatte (10') aufweist, die ausgelegt ist, um eine Einheit von Teilen aufzunehmen, die die Führung (10'A) und/oder das Spleißen (10'C) und/oder die Aufnahme von Kopplungs- und/oder Lagersystemen optischer Fasern erlauben, die derart eingerichtet sind, dass eine reversible Montage links oder recht von der Ebene erlaubt ist.

13. Vorrichtung nach einem der vorangehenden Ansprüche, **dadurch gekennzeichnet, dass** das seitliche Halteteil einen ersten und einen zweiten ebenen Teil aufweist, die sich in einer Ebene senkrecht zu einer Schwenkachse des Moduls im Verhältnis zu Halteteil erstrecken, wobei sich der zylindrische Drehzapfen zwischen dem ersten und dem zweiten ebenen Teil erstreckt, wobei der Schwenkhohlraum ausgelegt ist, um sich zwischen dem ersten und dem zweiten ebenen Teil einzufügen.

## Claims

1. A device for optical telecommunication pivoting modules made from plastic comprising a mounting frame (1A, 1B, 1C), at least one optical telecommunication pivoting module (4), and a lateral support part (2, 2', 2") for each module, said module being intended to be supported by the mounting frame (1A, 1B, 1C) by means of said lateral support part, the lateral support part (2, 2', 2") including at least one first pivot arrangement (3, 31', 31", 32"), the module including at least one second pivot arrangement (4A, 4B), said second pivot arrangement being configured to be connected to said first pivot arrangement (3, 31', 31", 32"), said support part (2) including at least one guide part intended to receive optical fibers upstream from said first pivot arrangement(s) (3, 31', 31", 32"), said guide part being configured to be placed on the trajectory of the optical fibers, said device being **characterized in that** said at least one first pivot arrangement (3, 31', 31", 32") is a cylindrical pivot and said at least one second pivot arrangement (4A, 4B) is a pivot cavity and **in that** said module (4, 4', 4") includes two lateral assemblies of at least one pivot cavity that are symmetrical relative to a central transverse plane (P) of the module and that are configured to be clipped one on the pivot(s) of the support part (2, 2', 2") mounted to the left of said plane (P) or the other on the pivot(s) of a support part (2, 2', 2") mounted to the right of said plane (P).

2. The device according to claim 1, **characterized in that** said at least one second pivot arrangement (4A, 4B) is configured to be clipped to said at least one first pivot arrangement (3, 31', 31", 32").

3. The device according to claim 1 or 2, **characterized in that** said module includes a lateral guide channel (4C, 4D, 4"C) for the optical fibers downstream from said guide part.

4. The device according to one of the preceding claims, **characterized in that** said guide part is a concave curved wall (2C) arranged upstream from the pivot axis of the module on the trajectory of the optical fibers.

5. The device according to the preceding claim, **characterized in that** said curved wall (2C) is a partial cylindrical wall of axis parallel to the pivot axis of the module.

6. The device according to one of the preceding claims, **characterized in that** said guide part is made up of a guide channel (2"D) equipped with retaining tabs (2"E).

7. The device according to the preceding claim, **characterized in that** said guide channel (2"D) equipped with retaining tabs ensures a trajectory of the fibers tangentially to the axis of said pivot(s).

8. The device according to claim 6 or 7, **characterized in that** said support part (2") includes a winding arrangement (2"F) of the optical fibers upstream from said guide channel (2"D).

9. The device according to one of the preceding claims, **characterized in that** said support part (2, 2', 2") is fixed by clipping, on a profile (1A) perforated by regularly vertically distributed orifices.

10. The device according to the preceding claim, **characterized in that** said support part (2) includes at least two openings (2A, 2B) of the same distance as two said orifices of said profile (1A) and positioned opposite these orifices, **in that** a bush (7A, 7B) is clipped in each of these openings (2A, 2B) and **in that** a blocking pin (8A, 8B) is clipped in each bush (7A, 7B) introduced into each orifice and opening.

11. The device according to one of the preceding claims, **characterized in that** the inside of said module (4) has a bottom configured to receive a set of parts allowing the guiding (4C) and/or the splicing (4D) and/or the accommodation of systems for coupling and/or storage of optical fibers, arranged so as to allow reversible mounting to the left or the right of said plane.

12. The device according to one of claims 1 to 10, **characterized in that** the inside of said module (4', 4") includes a pivoting plate (10') configured to receive a set of parts allowing guiding (10'A) and/or splicing (10'C) and/or accommodation of systems for coupling and/or storage of optical fibers, arranged so as to allow reversible mounting to the left or the right of said plane.

13. The device according to any one of the preceding claims, **characterized in that** the lateral support part includes first and second planar parts extending in a plane perpendicular to a pivot axis of the module relative to the support part, the cylindrical pivot extending between the first and the second planar parts, the pivot cavity being configured to be inserted between the first and the second planar parts.
